# EUROPEAN PATENT APPLICATION

(11) **EP 2 626 220 A1**
(43) Date of publication of application: **14.08.2013**
(21) Application number: 13153592.4
(22) Date of filing: 01.02.2013
(51) Int. Cl.: B60C 11/03, B60C 11/13

(54) **Motorcycle tire**

(30) Priority: 10.02.2012 JP 2012027590
(71) Applicant: Sumitomo Rubber Industries, Ltd., Kobe-shi, Hyogo-ken (JP)
(72) Inventor: Matsunami, Toshiyuki, Kobe-shi, Hyogo-ken, 651-0072 (JP)
(74) Representative: Manitz, Finsterwald & Partner GbR

(57) **Abstract**

A motorcycle tire comprises a tread portion (2) including a pair of tread edges (Te) to define a tread width (TW), and a pair of tread shoulder regions (Sh) each of which has a 12.5% width region of the tread width (TW) from each tread edge, the tread portion provided with a first lateral groove (8) extending from one of the tread shoulder regions (Sh) to the other one of the tread shoulder regions (Sh) and a second lateral groove (9) extending from a groove intersection (10) where the first lateral groove (8) and the second lateral groove (9) cross each other, and a protruded portion (12) being provided at least partially in the groove bottom portion of the groove intersection (10) so that a groove depth is reduced.

## Description

### Background of the invention

### Field of the Invention

The present invention relates to a motorcycle tire having an improved drainage performance and crack resistance of groove bottom.

### Description of the Related Art

A motorcycle tire which has a tread portion provided with a first lateral groove inclined at a certain angle with respect to a circumferential direction of the tire and a second lateral groove inclined at an opposite direction with respect to the first groove is proposed. Since the water under the tread portion is smoothly drained from the first groove or the second groove through a groove intersection where the first and second grooves cross each other, such a motorcycle tire may have an improved drainage performance.

However, when the tire comes into contact with the ground, the stress tends to concentrate at the groove bottom in the groove intersection, and thereby a crack may be produced thereon.

### SUMMARY OF THE INVENTION

The present invention has been worked out in light of the circumstances described above, and has a main object of providing a motorcycle tire having an improved drainage performance and crack resistance of groove bottom.

In accordance with the present invention, there is provided a motorcycle tire comprising a tread portion including a pair of tread edges to define a tread width, and a pair of tread shoulder regions each of which has a 12.5% width region of the tread width from each tread edge, the tread portion provided with a first lateral groove extending from one of said tread shoulder regions to the other one of said tread shoulder regions and a second lateral groove extending from a groove intersection where the first lateral groove and the second lateral groove cross each other, and a protruded portion being provided at least partially in the groove intersection so that a groove depth is reduced.

### BRIEF DESCRIPTION OF THE DRAWINGS

Fig. 1 is a cross sectional view of a motorcycle tire showing an embodiment of the present invention.
Fig. 2 is a development view of a tread portion of the tire of Fig. 1.
Figs. 3A to 3C are cross sectional views each showing a protruded portion.
Fig. 4 is a perspective view of a groove intersection.
Fig. 5A is a cross sectional view taken along the line A-A of Fig. 2, and Fig. 5B is a cross sectional view taken along the line B-B of Fig. 2.
Fig. 6 is a development view of a tread portion of a motorcycle tire showing another embodiment.

### DETAILED DESCRIPTION

An embodiment of the present invention will be explained below with reference to the accompanying drawings.

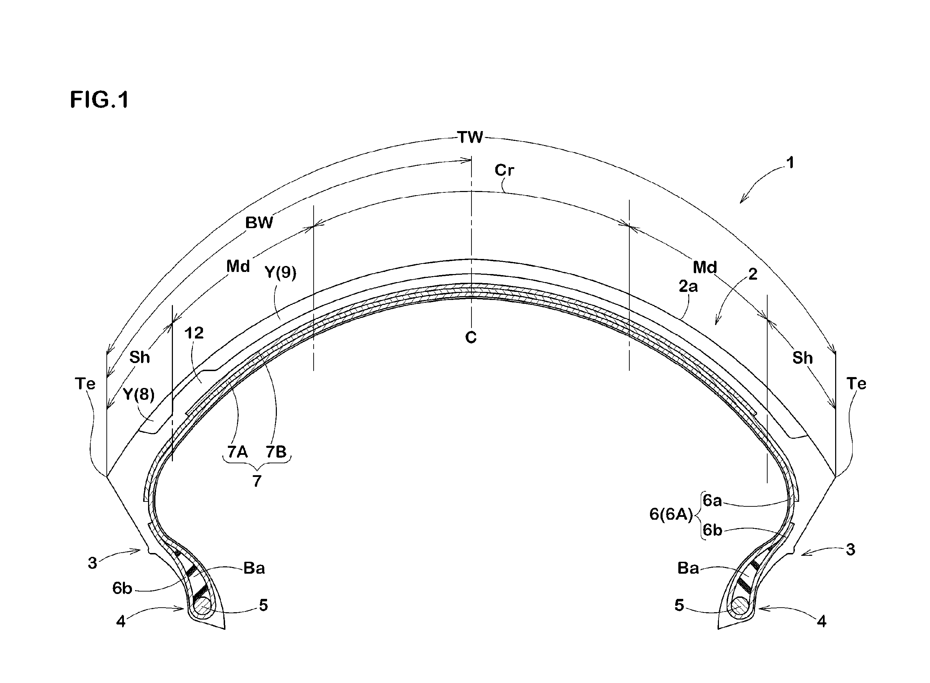

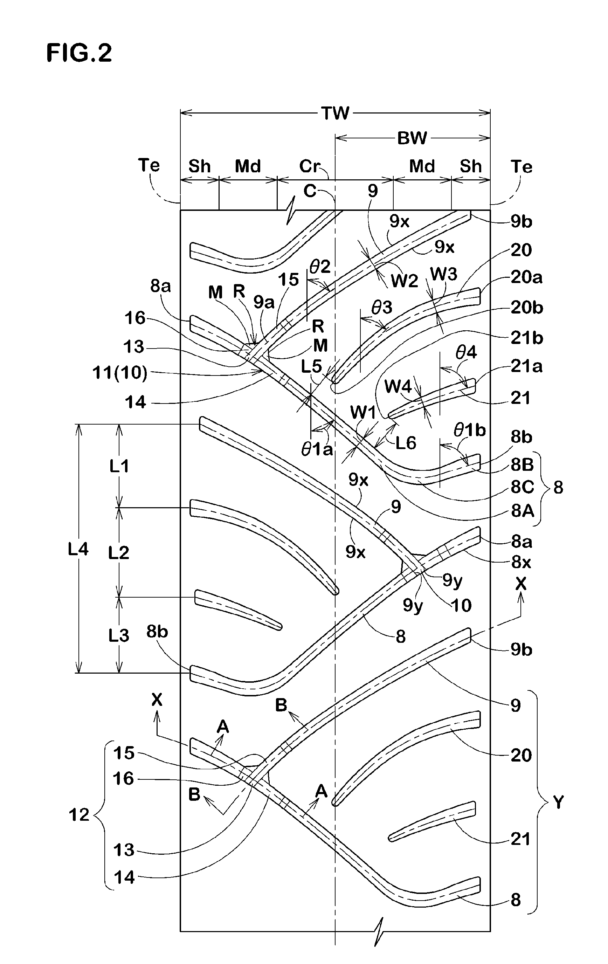

Fig. 1 shows a cross sectional view of a motorcycle tire (hereinafter it may simply be referred as "the tire") 1 in accordance with the present invention under a normally inflated unloaded condition. Fig. 2 is a development view of a tread portion of the tire of Fig. 1. The cross section shown in Fig. 1 corresponds to the line x-x of Fig. 2.

The normally inflated unloaded condition is such that the tire is mounted on a standard wheel rim and is inflated to a standard pressure but loaded with no tire load. In this application including specification and claims, various dimensions, positions and the like of the tire refer to those under the normally inflated unloaded condition of the tire unless otherwise noted.

The standard wheel rim is a wheel rim officially approved or recommended for the tire by standards organizations, the standard wheel rim is the "standard rim" specified in JATMA, the "Measuring Rim" in ETRTO, the "Design Rim" in TRA or the like, for example. The standard pressure is the "maximum air pressure" in JATMA, the "Inflation Pressure" in ETRTO, and the maximum pressure given in the "Tire Load Limits at various Cold Inflation Pressures" table in TRA or the like.

The tire 1 in accordance with the present invention comprises a tread portion 2, a pair of sidewall portions 3 extending from axially both ends of the tread portion 2, a pair of bead portion 4 each with a bead core 5 therein, a carcass 6 extending between bead cores 5 through the tread portion 2 and sidewall portions 3 and a belt layer 7 disposed radially outside the carcass 6 in the tread portion 2.

The tread portion 2 has a ground contact surface 2a extending between a pair of tread edges Te while curving in a convex arc-like manner. Each tread edge Te is provided at the axially outmost end of the tire. The tread edges Te define a tread width Tw which is a developed width therebetween. The tread portion 2 also has a tire equator C that defines a tread half width BW which is a developed width between the tire equator C and one of the tread edges Te.

The carcass 6 includes at least one carcass ply of cords inclined at an angle of from 60 to 90 degrees with respect to the tire equator C, and one carcass ply 6A having cords inclined at an angle of 90 degrees with respect to the tire equator C is provided in this embodiment. Preferably, organic fiber cords such as rayon, nylon, polyester may be used for the carcass cord in order to maintain the ride comfort and the rigidity of the tread portion 2.

The carcass ply 6A comprises a main portion 6a extending between bead cores 5 and a pair of turn-up portions 6b each turned up around the bead core 5 from the axially inside to the outside of the tire. A bead apex rubber Ba is provided in between the main portion 6a and the turned up portion 6b which extends and tapers radially outwardly from the bead core 5.

The belt layer 7 comprises two belt plies 7A and 7B in this embodiment that have parallel cords arranged at angle of from 5 to 40 degrees with respect to the tire equator C so that the plies 7A and 7B cross each other. As the belt cords, steel cords or high modulus organic fiber cords such as aramid, rayon can be preferably used.

The tread portion 2 includes: a pair of tread shoulder regions sh each of which has a 12.5% width region of the tread width TW from each tread edge Te; a pair of tread middle regions Md each of which has a 18.75% width region of the tread width TW from each tread shoulder region sh toward the axially inward; and a tread center region Cr between the tread middle regions Md.

Referring to Fig. 2, the tread portion 2 is provided with a plurality of lateral groove groups Y. In this embodiment, lateral groove groups Y are arranged in the circumferential direction of the tire so that adjacent groups Y have a relationship of line symmetry with respect to the tire equator C. Each groove group Y includes at least a first lateral groove 8 and a second lateral groove 9.

The first lateral groove 8 has an one end 8a located in the one of the tread shoulder regions sh and the other end 8b located in the other one of the tread shoulder regions sh. Namely, the first lateral groove 8 extends from one of the tread shoulder regions sh to the other one of the tread shoulder regions sh. Such a first lateral groove 8 may drain the water under the tread portion 2 to the tread edges Te. The second lateral groove 9 extends from a groove intersection 10 where the first lateral groove 8 and the second lateral groove 9 cross each other. The water under the tread portion 2 may smoothly flow from the groove intersection 10 through the first lateral groove 8 or the second lateral groove 9 to the tread edges Te so that the drainage performance of the tire may improve.

Here, the groove intersection 10 is defined as an area that a smoothly extended portion having virtual groove edges 9y of the second lateral groove 9 is overlapped with the first lateral groove 8.

The first lateral groove 8 includes a first inclined portion 8A, a second inclined portion 8B and a curved portion 8C provided therebetween.

The first inclined portion 8A extends beyond the tire equator C from the one end 8a while maintaining an inclination in one direction with respect to the circumferential 1 direction of the tire. The second inclined portion 8B extends from the other end 8b with an opposite inclination to the first inclined portion 8A. The curved portion 8C has an arc shape so that the first inclined portion 8A and the second inclined portion 8B are smoothly connected. Such a groove shape of the first lateral groove 8 may improve the drainage performance due to the first inclined portion 8A as well as the wet grip performance due to the curved portion 8c.

Basically, the stress on the groove bottom of the curved portion 8C is relatively large during traveling. On the other hand, the crown region Cr receives the maximum reaction force from the ground in straight running. Therefore, the curved portion 8C is preferably provided in the tread middle region Md or the tread shoulder region sh so that the crack of the groove bottom due to the large stress acting thereon is prevented. The curved portion 8C is provided in the tread middle region Md in this embodiment.

The second lateral groove 9 has an opposite inclination to the first inclined portion 8A. The second lateral groove 9 may improve the drainage performance in combination with the first inclined portion 8A through the groove intersection 10, regardless of the rotational direction of the tire.

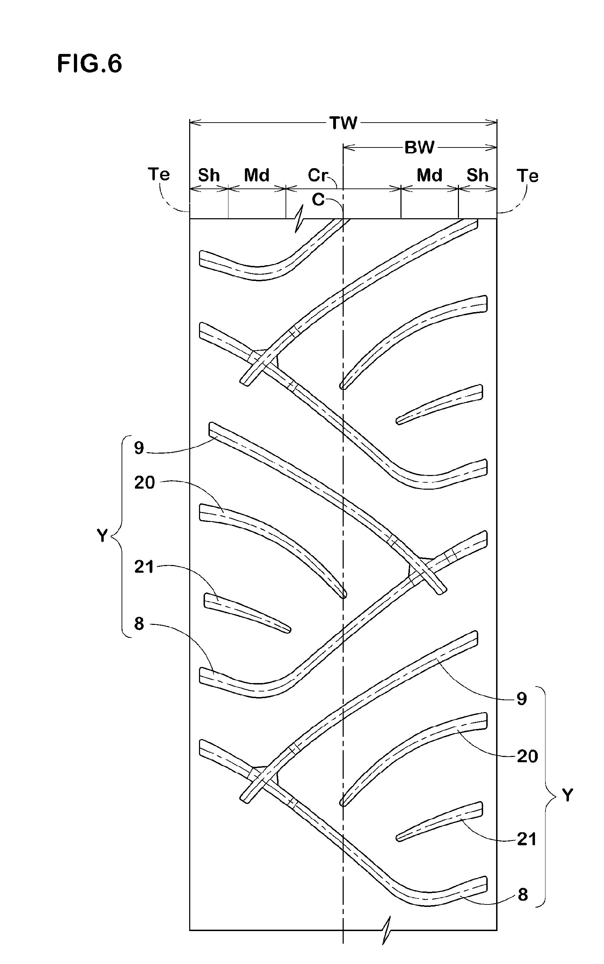

The one end 9a of the second lateral groove 9 is connected to the first inclined portion 8A of the first lateral groove 8 so that a T-shaped groove intersection is formed. Namely, the second lateral groove 9 does not penetrate the first inclined portion 8A to improve the rigidity of the groove intersection 10. However, referring to Fig. 6, the groove intersection may be formed as a crossed-shaped such that the second lateral groove 9 penetrates the first lateral groove 8.

The other end 9b of the second lateral groove 9 is located in the shoulder region sh in opposite side of the one end 9a to effectively improve the drainage performance.

Preferably, groove widths w1 and w2 of the first and second lateral grooves 8, 9 are in a range of from 1.5 to 5.5 % the tread width TW in order to improve the drainage performance aw well as the crack resistance of the groove bottom. From the same point of view, groove depths D1 and D2 of the first and second lateral grooves 8, 9 are in a range of from 1.5 to 9.0 mm. In this embodiment, the first lateral 1 groove 8 and the second lateral groove 9 have the same groove depths.

In order to smoothly drain the water under the tread portion 2, the first inclined portion 8A, the second inclined portion 8B and the second lateral groove 9 have angles θ1a, θ1b, θ2 not less than 30 degrees, more preferably not less than 40 degrees, preferably not more than 80 degrees, and more preferably not more than 75 degrees with respect to the circumferential direction of the tire, respectively.

Preferably, the groove intersection 10 is provide in between the tire equator C and the tread shoulder region sh for preventing a crack on the bottom of the groove intersection 10 while maintaining the drainage performance. Especially, the groove intersection 10 is preferably provided in the tread middle region Md.

A protruded portion 12 is provided at least partially in the groove intersection 10 so that the groove depth thereof is reduced. Since the protruded portion 12 tends to enhance the rigidity on the groove bottom in the groove intersection 10, the crack thereof is effectively prevented.

The protruded portion 12 includes: an intersection part 13 provided in the groove intersection 10; a first part 14 provided in the first lateral groove 8 and extending from the intersection part 13 toward the tire equator C; a second part 15 provided in the second lateral groove 9 and extending from the intersection part 13 toward the tire equator C; and a third part 16 provided in the first lateral groove 8 and extending from the intersection part 13 toward the tread edge Te. In the developed view of the tread portion 2, since the protruded portion 12 has a T-shape, the rigidity of the groove intersection 10 is effectively enhanced so that the crack thereof is prevented.

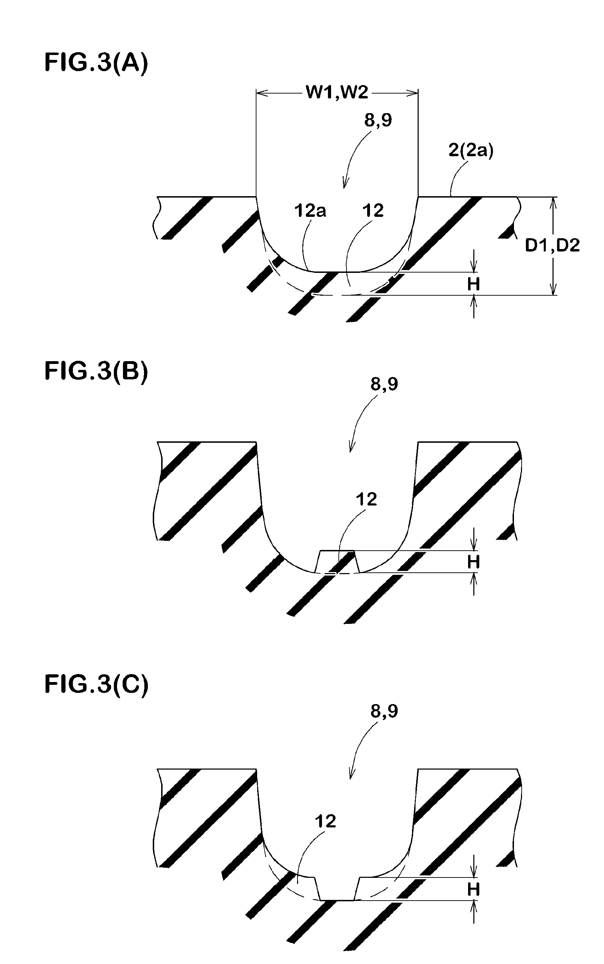

Preferably, the protruded portion 12 has a height H (shown in Fig. 3) not less than 20%, more preferably not less than 30%, preferably not more than 70% and more preferably not more than 60% the maximum groove depth D1 in order to improve the drainage performance, as well as the crack resistance of the groove bottom of the groove intersection 10.

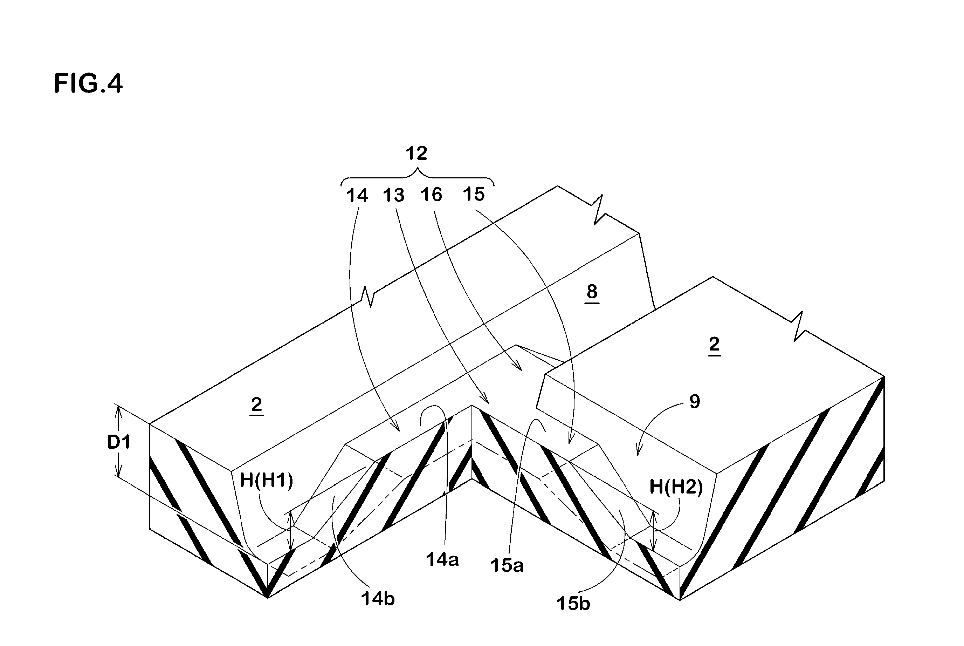

Referring to Fig. 4, each of the intersection part 13, the first part 14 and the second part 15 of the protruded portion 12 has the same maximum height to prevent a large rigidity difference thereto, and thereby the crack thereof may be effectively prevented, in this embodiment.

Referring to Fig. 3A, the protruded portion 12 is provided at an entire range in the groove width direction of the first lateral groove 8 or the second lateral groove 9 to effectively improve the crack resistance of the groove bottom. In the groove cross section, the protruded portion 12 has a radially outer surface 12a that is gradually protruded from the center toward outside in the groove width direction. This embodiment may be useful to further prevent the crack of the groove bottom by reducing the stress thereon. The outer surface 12a of the protruded portion 12 may be formed parallel to the tread surface 2a.

Referring to Fig. 3B, the protruded portion 12 may be provided in only a center region in the groove width direction of the first lateral groove 8 or the second lateral groove 9.

Referring to Fig. 3C, the protruded portion 12 may be provided in both sides of outer regions in a width direction of the first lateral groove 8 or the second lateral groove 9.

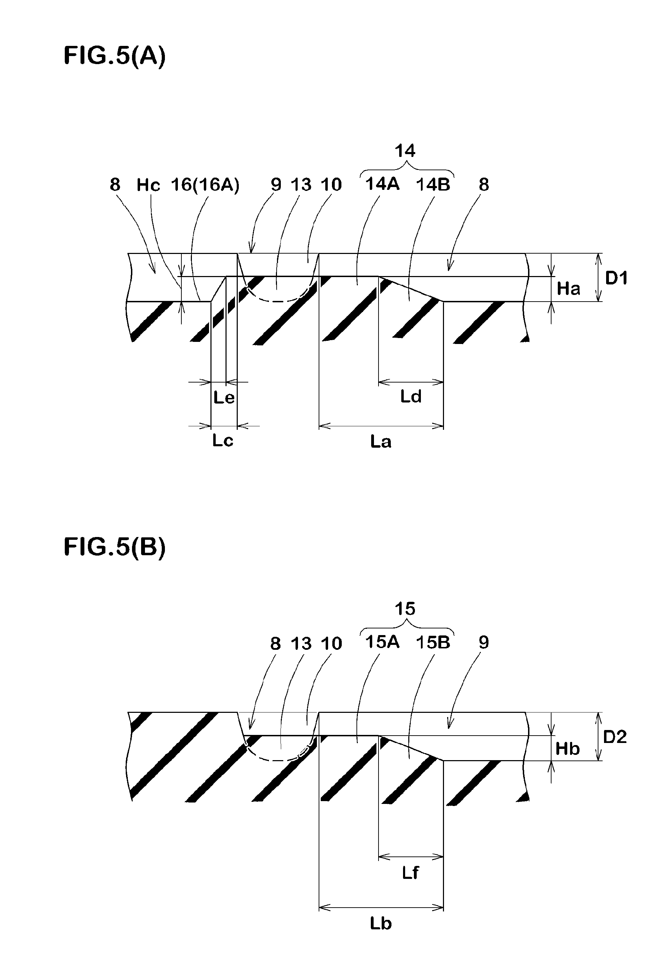

Fig. 5A shows a cross section taken along the line A-A of Fig. 2. In order to further improve the drainage performance as well as the crack resistance on the groove bottom, the first part 14 of the protruded portion 12 has a length La extending along the first lateral groove 8 that is preferably not less than 50%, more preferably not less than 75%, preferably not more than 200% and more preferably not more than 175% the groove width w1 of the first lateral groove 8.

Fig. 5B shows a cross section taken along the line B-B of Fig. 2. In order to further improve the drainage performance as well as the crack resistance of the groove bottom, the second part 15 of the protruded portion 12 has a length Lb extending along the second lateral groove 9 that is preferably not less than 50%, more preferably not less than 75%, preferably not more than 200% and more preferably not more than 175% the groove width w2 of the second lateral groove 9.

As shown in Fig. 2, the length from the groove intersection 10 to the one end 8a of the first lateral groove 8 is smaller than the length of the second lateral groove 9. Therefore, since the third part 16 has relatively high rigidity, the length Lc of the third part 16 along the first lateral groove 8 is smaller than the length Lb in order to prevent the deterioration of the drainage performance. Preferably, the length Lc is in a range of from 30 to 150 % the groove width w1.

Referring to Fig. 5A, the first part 14 in this embodiment comprises a first flat portion 14A having a constant height Ha and a first tapered portion 14B having a height gradually decreasing toward the tire equator C. The third part 16 in this embodiment comprises a third tapered portion 16A having a height Hc gradually decreasing toward the tread edge Te.

Referring to Fig. 5B, the second part 15 comprises a second flat portion 15A having a constant height Hb and a second tapered portion 15B having a height gradually decreasing toward the tire equator C.

Such tapered portion 14B, 15B and 16B are useful to reduce the rigidity difference in the lateral grooves 8, 9, and thereby the crack resistance thereon as well as the drainage performance may be improved. As shown in Fig. 5A, the third part 16 may include a third flat part having a constant height.

Preferably, each length Ld, Lf and Le of tapered portions is adjusted based on each groove length they are provided. For example, the third tapered portion 16B has the length Le along the first lateral groove 8 being smaller than the length Ld of the first tapered portion 14B along in the first lateral groove 8 for improving the drainage performance while maintaining the crack resistance. Especially, the length Le is preferably not less than 20%, more preferably not less than 30%, preferably not more than 70% and more preferably not more than 60% the length Ld. From the same point of view, the length Ld is preferably not less than 20%, more preferably not less than 30%, preferably not more than 70% and more preferably not more than 60% the length La of the first part 14.

Referring to Fig. 5B, since the length of the second lateral groove 9 is smaller than that of the first lateral groove 8, the length Lf of the second tapered portion 15B along the second lateral groove 9 is preferably smaller than the length Ld. Especially, the length Lf is preferably not less than 30%, more preferably not less than 40%, preferably not more than 80% and more preferably not more than 70% the length Ld in order to further improve the crack resistance of the groove bottom as well as the drainage performance.

Referring to Fig. 2, a chamfer portion M having a triangle shape in a plan view is provided at a corner of the land portion between the first lateral groove 8 and the second lateral groove 9. In this embodiment, a pair of chamfer portions M, M are provided around both corners of the second lateral groove 9 to improve the rigidity near the groove intersection 10.

The groove group Y also includes a third lateral groove 20 and a forth lateral groove 21, in this embodiment. The third lateral groove 20 extends from the axially outer end 20a located in the tread shoulder region sh to the axially inner end 20b located near the tire equator C. The fourth lateral groove 21 extends from the axially outer end 21a located in the tread shoulder region sh to the axially inner end 21b without crossing other lateral grooves.

Each of the third lateral groove 20 and the fourth lateral groove 21 has the same inclination direction with the second lateral groove 9. In this embodiment, the third lateral groove 20 and the fourth lateral groove 21 are provided such that an area between the second lateral groove 9 and the second inclined portion 8B is divided substantially equally among three to maintain the pattern rigidity high. Preferably, each groove pitches L1, L2 and L3 of the first to fourth lateral grooves 8, 9, 20 and 21 is in a range of from 20 to 45 % the circumferential length L4 between the end 8b of the first lateral groove and the end 9B of the second lateral groove 9.

The third lateral groove 20 and the fourth lateral groove 21 are provided so as not to cross any other lateral grooves to maintain the pattern rigidity high. Preferably, the minimum distance L5 between the axially inner end 20b of the third lateral groove 20 and the first lateral groove 8 is not less than 3.0mm, more preferably not less than 5.0mm, preferably not more than 25mm, and more preferably not more than 20mm. Similarly, the minimum distance L6 between the axially inner end 21b of the fourth lateral groove 21 and the first lateral groove 8 is preferably set in the same range above.

In order to further obtain the effects above, groove widths w3, w4 of the third lateral groove 20 and the fourth lateral groove 21 are preferably in a range of from 1.5 to 7.0 % the tread width TW. Groove depths D3, D4 of the third lateral groove 20 and the fourth lateral groove 21 are preferably in a range of from 1.5 to 9.0 mm.

In order to further improve the drainage performance, the third lateral groove 20 and the fourth lateral groove 21 have angles θ3, θ4 with respect to the circumferential direction of the tire that are preferably not less than 30 degrees, more preferably not less than 40 degrees, preferably not more than 80 degrees, and more preferably not more than 75 degrees.

The present invention is more specifically described and explained by means of the following Examples and References. It is to be understood that the present invention is not limited to these Examples.

### Comparison Test

Motorcycle tires of 150/70-13 with basic tread patterns of Fig. 2 or Fig. 6 except for details shown in Table 1 were made and tested. Major common specifics of tires and test method are as follows.

### Tire spec.

Tread width TW: 145mm
Rim width: 4.5 inches
Inflation pressure: 225 kPa
Groove depth D1 of first lateral groove: 3.6 to 7.9 mm
Groove depth D2 of second lateral groove: 3.6 to 7.9 mm
Groove depth D3 of third lateral groove: 3.6 to 7.7 mm
Groove depth D4 of fourth lateral groove: 3.8 to 6.3 mm
Height H of protruded portion: 2.0 mm

### wet grip performance test:

Each test tire was installed in the rear wheel of a motorcycle having a four cycle engine of 400cc displacement. A test driver drove the motorcycle on a test course having a wet asphalt road, and evaluated the wet grip performance such as side grip and traction by his feeling. The result is shown as a score. The greater the score, the better the performance is. As for the front wheel of the motorcycle, a conventional tire was installed as follows.
Size: 120/80-14
Tread width: 117 mm
Rim width: 2.75 inches
Inflation pressure: 200 kPa

### Crack resistance test:

Endurance test from the first to third steps thereof were conducted in accordance with FEDERAL MOTOR VEHICLE SAFETY STANDARDS, FMVSS1119, during 72 or 144 hours based on the condition in the third step, and then the crack generated on the groove bottom of each tire was checked by naked eye of the tester. The results are shown as follows:
S: No crack was found after 144 hours;
A: Less than six cracks were found after 144 hours;
B: No crack was found after 72 hours, but at lest six cracks were found after 144 hours; and
C: Crack was found after 72 hours;

### Test results are shown in Table 1

**Table 1-1**

| | Ref.1 | Ex.1 | Ref.2 | Ref.3 | Ex.2 | Ex.3 | Ex.4 | Ex.5 | Ex.6 | Ex.7 | Ex.8 |
|---|---|---|---|---|---|---|---|---|---|---|---|
| Tread pattern | Fig.2 | Fig.2 | Fig.2 | Fig.2 | Fig.2 | Fig.2 | Fig.2 | Fig.2 | Fig.2 | Fig.2 | Fig.2 |
| Location of one end of first lateral groove | Sh | Sh | Cr | Md | Sh | Sh | Sh | Sh | Sh | Sh | Sh |
| Location of groove intersection | Md | Md | Md | Md | Sh | Cr | Md | Md | Md | Md | Md |
| Ha/D1 (%) | - | 45 | 45 | 45 | 45 | 45 | 15 | 20 | 70 | 75 | 45 |
| La/W1 (%) | - | 150 | 150 | 150 | 150 | 150 | 150 | 150 | 150 | 150 | 40 |
| Le/Ld (%) | - | 50 | 50 | 50 | 50 | 50 | 50 | 50 | 50 | 50 | 50 |
| Lf/Ld (%) | - | 60 | 60 | 60 | 60 | 60 | 60 | 60 | 60 | 60 | 60 |
| Crack resistance | C | S | S | S | S | B | B | A | S | S | B |
| Wet grip performance (Score) | 3 | 2.8 | 1 | 1.5 | 2 | 2.5 | 3 | 2.9 | 2.7 | 2.5 | 3 |

**Table 1-2**

| | Ex.9 | Ex.10 | Ex.11 | Ex.12 | Ex.13 | Ex.14 | Ex.15 | Ex.16 | Ex.17 | Ex.18 | Ex.19 | Ex.20 |
|---|---|---|---|---|---|---|---|---|---|---|---|---|
| Tread pattern | Fig.2 | Fig.2 | Fig.2 | Fig.2 | Fig.2 | Fig.2 | Fig.2 | Fig.2 | Fig.2 | Fig.2 | Fig.2 | Fig.6 |
| Location of one end of first lateral groove | Sh | Sh | Sh | Sh | Sh | Sh | Sh | Sh | Sh | Sh | Sh | Sh |
| Location of groove intersection | Md | Md | Md | Md | Md | Md | Md | Md | Md | Md | Md | Md |
| Ha/D1 (%) | 45 | 45 | 45 | 45 | 45 | 45 | 45 | 45 | 45 | 45 | 45 | 45 |
| La/W1 (%) | 50 | 250 | 270 | 150 | 270 | 150 | 150 | 150 | 150 | 150 | 150 | 150 |
| Le/Ld (%) | 50 | 50 | 50 | 25 | 30 | 60 | 65 | 50 | 50 | 50 | 50 | 50 |
| Lf/Ld (%) | 60 | 60 | 60 | 60 | 60 | 60 | 60 | 35 | 40 | 70 | 75 | 60 |
| Crack resistance | A | S | S | B | A | S | A | B | A | S | A | S |
| Wet grip performance (Score) | 2.9 | 2.7 | 2.5 | 3 | 2.8 | 2.6 | 2.5 | 3 | 2.9 | 2.7 | 2.6 | 2.8 |

From the test results, it was confirmed that Example tires in accordance with the present invention can be effectively improved the crack resistance on groove bottom and the wet grip performance.

## Claims

1. A motorcycle tire comprising
a tread portion including a pair of tread edges to define a tread width, and a pair of tread shoulder regions each of which has a 12.5% width region of the tread width from each tread edge,
the tread portion provided with
a first lateral groove extending from one of said tread shoulder regions to the other one of said tread shoulder regions and
a second lateral groove extending from a groove intersection where the first lateral groove and the second lateral groove cross each other, and
a protruded portion being provided at least partially in the groove intersection so that a groove depth is reduced.

2. The tire according to claim 1, wherein
the first lateral groove includes an inclination opposite to the second lateral groove.

3. The tire according to claim 1, wherein
each of the first lateral groove and the second lateral groove has a groove depth, and
the protruded portion has a height of from 20 to 70 % the groove depth.

4. The tire according to claim 1, wherein
each of the first lateral groove and the second lateral groove has a groove width, and
the protruded portion has a length of from 50 to 250 % the groove width.

5. The tire according to claim 1, wherein
the groove intersection is located in between one of said shoulder regions and a tire equator, and
the protruded portion includes:
an intersection part provided in the groove intersection;
a first part provided in the first lateral groove and extending toward the tire equator; and
a second part provided in the second lateral groove and extending toward the tire equator.

6. The tire according to claim 5, wherein
the intersection part, the first part and the second part are connected one another.

7. The tire according to claim 5, wherein
the first part has a first tapered portion having a height gradually decreasing toward the tire equator.

8. The tire according to claim 5, wherein
the second part has a second tapered portion having a height gradually decreasing toward the tire equator, and
the second tapered portion has a length along the second lateral groove smaller than a length of the first tapered portion along in the first lateral groove.

9. The tire according to claim 8, wherein
the protruded portion includes a third part provided in the first lateral groove and extending toward the tread edge,
the third part has a third tapered portion having a height gradually decreasing toward the tread edge, and
the third tapered portion has a length along the first lateral groove smaller than the length of the first tapered portion.

10. The tire according to claim 1, wherein
the protruded portion is provided an entire range in a width direction of the first lateral groove or the second lateral groove.

11. The tire according to claim 1, wherein
the protruded portion is provided in only a center region in a width direction of the first lateral groove or the second lateral groove.

12. The tire according to claim 1, wherein
the protruded portion is provided in both sides of outer regions in a width direction of the first lateral groove or the second lateral groove.
